(19) **Europäisches Patentamt**

**European Patent Office**

**Office européen des brevets**

(11) **EP 1 413 729 B1**

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(51) Int Cl.:
*F02D 41/18* (2006.01)     *F02D 35/02* (2006.01)
*F02D 13/02* (2006.01)

(21) Anmeldenummer: **03010881.5**

(22) Anmeldetag: **15.05.2003**

(54) **Verfahren zum Bestimmen des Restgaspartialdrucks in einem Brennraum einer Brennkraftmaschine**

Method for determining the remaining partial pressure in the combustion chamber of an internal combustion engine

Procédé pour déterminer la pression partielle restante dans une chambre de combustion d'un moteur à combustion interne

(84) Benannte Vertragsstaaten:
**DE FR IT SE**

(30) Priorität: **23.10.2002 DE 10249342**

(43) Veröffentlichungstag der Anmeldung:
**28.04.2004 Patentblatt 2004/18**

(73) Patentinhaber: **ROBERT BOSCH GMBH**
**70442 Stuttgart (DE)**

(72) Erfinder:
• **Wild, Ernst**
**71739 Oberriexingen (DE)**
• **Mezger, Werner**
**74246 Eberstadt (DE)**
• **Eberle, Kristina**
**71706 Hardthof (DE)**
• **Reuschenbach, Lutz**
**70469 Stuttgart (DE)**
• **Falk, Mario**
**70195 Stuttgart (DE)**

(56) Entgegenhaltungen:
EP-A- 1 213 466     US-A1- 2002 004 696
US-A1- 2002 011 101     US-B1- 6 439 197

EP 1 413 729 B1

**Beschreibung**

Stand der Technik

Aus der EP 1 213 466 ist bereits ein Verfahren zur Bestimmung eines Restgasgehalts in einem Verbrennungsraum eines Zylinders einer Viertakt-Brennkraftmaschine bekannt, bei dem ausgehend von einem ersten Kennfeld, das eine Rücksaugung des Abgases in den Verbrennungsraum berücksichtigt und einem zweiten Kennfeld, das eine innere Abgasrückführung berücksichtigt, in Abhängigkeit von ermittelten Betriebsgrößen der Ventilsteuerung ein Restgasgehalt im Verbrennungsraum bestimmt wird. Ein erster Restgasanteil wird ausgehend von einer Auslassventilspreizung und einem Auslassventilhub anhand eines ersten Kennfeldes bestimmt. Ein zweiter Restgasanteil wird aus einer Einlass- und Auslassventilspreizung, einem Einlass- und Auslassventilhub sowie einer Ventilüberschneidungsfläche sowie deren Flächeninhalt und deren Versetzung anhand eines zweiten Kennfeldes bestimmt. Die Summe der beiden Restgasanteile bildet dann den aktuellen Restgasgehalt. Ferner ist es in einem weitem Ausführungsbeispiel vorgesehen, die Ergebnisse der Kennfelder durch Berücksichtigung weiterer Betriebsparameter, wie beispielsweise Drehzahl des Verbrennungsmotors und/oder eines Differenzgasdrucks zu wichten.

Ferner wird, (ohne vorhandenen druckschriftlichen Beleg) als bekannt vorausgesetzt, der Partialdruck der Luft zusammen mit dem Restgaspartialdruck den im Brennraum der Brennkraftmaschine herrschenden Druck bildet, der z. B. von Motorsteuerungen mit elektromotorisch verstellbarer Drosselklappe neben anderen Größen benötigt wird. Zum Zeitpunkt, zu dem das Einlassventil schließt, herrscht Druckgleichheit zwischen Saugrohr und Brennraum, so dass mit einem im Saugrohr eingebauten Drucksensor der Brennraumdruck zu diesem Zeitpunkt gemessen werden kann. Die nach einer Verbrennung im Totvolumen des Brennraumes vorhandene Restgasmenge wird während des anschließenden Ansaugvorganges bei noch offenem Auslassventil infolge der vorherrschenden Druckverhältnisse vergrößert und bestimmt wegen des offenen Einlassventils auch den Restgaspartialdruck im Saugrohr mit. Eine gewisse Restgasmenge im Brennraum wirkt sich günstig aus auf die Konvertierung und Verringerung des NOx-Gehaltes bei der Abgasemission und auch auf den Verbrauch. Es ist bekannt, den Saugrohrdruck zu modellieren, um einen Drucksensor im Saugrohr zu sparen. Der Partialdruck der Luft im Saugrohr wird aus dem Signal eines Luftmassenstrommessers modelliert. Der Partialdruck des Restgases im Brennraum wird appliziert als Funktion von Motordrehzahl und Nockenwellenstellung. Die bisherige Bestimmung des Restgaspartialdruckes deckt nur Systeme ab, die allein die Einlassnocke stetig verstellen und allenfalls noch eine Zweipunktverstellung der Auslassnocke beinhalten. Bei zusätzlich stetig verstellbarer Auslassnocke bzw. stetig verstellbarem Verstellwinkel des Auslassventils lässt sich der Restgaspartialdruck mit den bekannten Maßnahmen nicht bestimmen.

Der Erfindung liegt die Aufgabe zugrunde, ein Verfahren der eingangs genannten Art bereit zu stellen, mit dem auch der Restgaspartialdruck im Brennraum bei Systemen mit stetig veränderbarem Verstellwinkel des Einlassventils und des Auslassventils mit möglichst wenig Aufwand bestimmbar ist.

Vorteile der Erfindung

Diese Aufgabe wird mit den Merkmalen des Anspruches 1 gelöst. Hiernach ist vorgesehen, dass den Restgaspartialdruck bezeichnende, in einem Prüffeld ermittelte Restgaswerte für einen frühen, z.B. den frühestmöglichen Einlass-Verstellwinkel in einem ersten Kennfeld für eine frühe Überschneidung und für einen späten, z.B. den spätestmöglichen Auslass-Verstellwinkel in einem zweiten Kennfeld für eine späte Überschneidung vorgehalten werden, dass aus dem Einlass-Verstellwinkel und dem Auslass-Verstellwinkel zu einem Überschneidungswinkel, in dem sowohl Einlassventil als auch Auslassventil geöffnet sind, ein Schwerpunktfaktor berechnet wird, der einen Verstellwinkelschwerpunkt bezeichnet, und dass zum Bestimmen der Restgaswerte für einen Verstellwinkelbereich zwischen dem frühen Einlass-Verstellwinkel und dem späten Auslass-Verstellwinkel zwischen den Restgaswerten der beiden Kennfelder mit dem Schwerpunktfaktor interpoliert wird.

Mit dieser Vorgehensweise werden der Verstellwinkel des Einlassventils (Einlass-Verstellwinkel) und des Auslassventils (Auslass-Verstellwinkel) in einen Überschneidungswinkel, beispielsweise Nockenwellenüberschneidungswinkel, und einen Schwerpunktfaktor der Verstellung umgerechnet. Der Überschneidungswinkel beeinflusst das Restgas stark, der Schwerpunktfaktor beeinflusst es schwach. Die unterschiedliche Beeinflussung ermöglicht, den Restgaspartialdruck als Funktion der beiden Kennfelder in Abhängigkeit von Motordrehzahl und Überschneidungswinkel darzustellen, zwischen denen mit Hilfe des Schwerpunktfaktors interpoliert wird. Wegen der schwachen Abhängigkeit des Restgaspartialdrucks vom Schwerpunktfaktor bleiben die Fehler klein, die durch z.B. lineare Interpolation entstehen. Die Applikation kann sich auf die Bedatung der Kennfelder beschränken, die für den Schwerpunktfaktor 0 bzw. 1 gelten. Bei einfachen Ansprüchen an die Genauigkeit der Restgasbestimmung ermöglicht die Erfindung eine Füllungserfassung, die mit nur einem Sensor auskommt. Der Zusammenhang zwischen Luftmasse und Saugrohrdruck ist nämlich im Wesentlichen bekannt bzw. kann durch Versuche im Prüffeld ermittelt werden. Bei Verwendung eines an sich bekannten Luftmassenmessers, der üblicherweise vor der Drosselklappe angeordnet ist, kann der Saugrohrdruck modelliert werden.

Bei Verwendung eines an sich ebenfalls bekannten Saugrohrdrucksensors, der üblicherweise hinter der Drosselklappe angeordnet ist, kann die Luftfüllung im Brennraum modelliert werden. Bei höheren Ansprüchen werden sowohl Luftmassenmesser als auch Saugrohrdrucksensor verwendet. Dann ermöglicht die Erfindung bei Ausfall eines Sensors die Fortsetzung des Betriebs in ausreichender Güte.

Eine für die Bestimmung des Restgaspartialdrucks im Saugrohr und infolge des bekannten Zusammenhangs auch im Brennraum besteht darin, dass der Schwerpunktfaktor so gebildet wird, dass er von Null bei frühem, insbesondere frühestem Einlass-Verstellwinkel auf Eins bei spätem, insbesondere spätestem Auslass-Verstellwinkel steigt.

Eine günstige Ausbildung, den Restgaspartialdruck mit wenig Aufwand zuverlässig zu ermitteln, besteht darin, dass der Schwerpunktfaktor aus dem Zusammenhang $FVW = (S_{aktuell} - S_{früh}) / (S_{spät} - S_{früh})$ bestimmt wird, wobei $S_{aktuell}$ den aktuellen Schwerpunkt, $S_{früh}$ den frühen Schwerpunkt bei frühem, beispielsweise frühestem Einlass-Verstellwinkel und $S_{spät}$ den späten Schwerpunkt bei spätem, beispielsweise spätestem Auslass-Verstellwinkel bezeichnen.

Eine vorteilhafte Vorgehensweise bei der Berechnung ergibt sich dabei dadurch, dass der frühe Schwerpunkt ($S_{früh}$) aus der Beziehung $S_{früh} = - \frac{1}{2} (GVW - 2_* \, MAX \, (0; \, GVW - FRWE))$ der späte Schwerpunkt ($S_{spät}$) aus der Beziehung $S_{spät} = + \frac{1}{2} (GVW - 2_* \, MAX \, (0; \, GVW - SPWA))$ und der aktuelle Schwerpunkt ($S_{aktuell}$) aus der Beziehung $S_{aktuell} = \frac{1}{2} (VWA - VWE)$ bestimmt werden, wobei GVW den Gesamtverstellwinkel, FRWE den frühen, beispielsweise frühesten Einlass-Verstellwinkel, SPWA den späten, beispielsweise spätesten Auslass-Verstellwinkel, VWA den aktuellen Auslass-Verstellwinkel, VWE den aktuellen Einlass-Verstellwinkel und MAX (a; b) eine Funktion bezeichnen, die den größeren Wert aus a und b auswählt.

Verschiedene günstige Ausgestaltungen des Verfahrens bestehen darin, dass es in Verbindung mit einem Luftmassenmesser in einem Ansaugrohr zum Modellieren eines Saugrohrdruckes oder in Verbindung mit einem Saugrohrdrucksensor zum Modellieren der Luftfüllung im Brennraum bei an sich bekannter Beziehung zwischen Luftmasse und Saugrohrdruck verwendet wird oder dass es bei Vorhandensein sowohl eines Luftmassenmessers als auch eines Saugrohrdrucksensors zur Fortsetzung des Betriebes bei Ausfall eines der beiden Sensoren verwendet wird.

Zeichnung

Die Erfindung wird nachfolgend anhand eines Ausführungsbeispiels unter Bezugnahme auf die Zeichnungen näher erläutert. Es zeigen:

Fig. 1    Öffnungswinkelbereiche eines Einlassventils und eines Auslassventils sowie zugehörige Verstellwinkelbereiche,

Fig. 2    eine schematische Blockdarstellung zum Ermitteln von Restgaswerten bei verschiedenen Einlass- und Auslass-Verstellwinkeln,

Fig. 3    eine schematische Darstellung zur Lage eines aktuellen Schwerpunkts und

Fig. 4    eine schematische Darstellung zur Abhängigkeit eines frühesten Schwerpunkts und spätesten Schwerpunkts von einem Gesamtverstellwinkel.

Ausführungsbeispiel

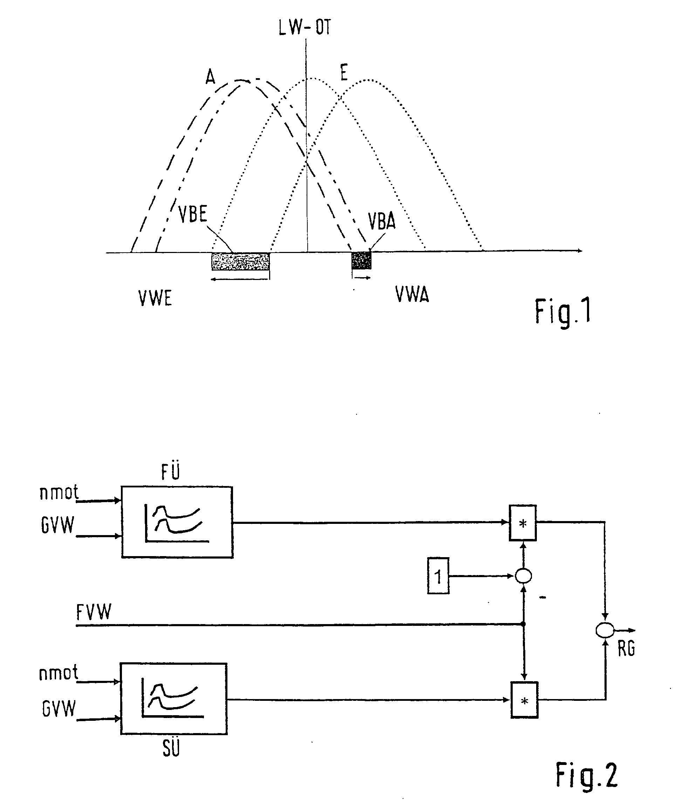

Wie Fig. 1 zeigt, ist eine Restgasfüllung bzw. Restgasmenge und damit auch der Restgaspartialdruck im Brennraum oder entsprechend im Ansaugrohr in erster Näherung von einem Überschneidungswinkel, beispielsweise einem Nockenwellenüberschneidungswinkel abhängig, der den Bereich angibt, in dem sowohl ein Einlassventil als auch ein Auslassventil geöffnet sind und einen Einlass E bzw.

Auslass A bilden. Der Einlass E kann über einen Verstellbereich VBE und der Auslass A über einen Verstellbereich VBA variiert werden, indem ein Verstellwinkel des Einlassventils VWE bzw. ein Verstellwinkel VWA des Auslassventils z.B. durch entsprechende Verstellung einer betreffenden Nocke der Nockenwelle geändert werden. Eingezeichnet ist auch die Lage eines oberen Totpunktes OT des Kolbens in dem betreffenden Brennraum. Der Überschneidungswinkel wird vergrößert, wenn die Verstellung der Einlassnockenwelle aktiviert wird, die die Offnung des Einlassventils nach früh verschiebt, und/oder die Verstellung der Auslassnockenwelle aktiviert wird, die das Schließen des Auslassventils nach spat schiebt. Anstelle mit der Nockenwelle ist es auch denkbar, das Einlassventil und Auslassventil mit einem anderen Stellglied zu betätigen.

Aus dem Verstellwinkel VWE des Einlassventils und dem Verstellwinkel VWA des Auslassventils wird deshalb ein Gesamtverstellwinkel GVW gebildet, der zusammen mit der zwischen den Verstellbereichen VBE und VBA liegenden Grundüberschneidung den größtmöglichen Überschneidungswinkel bildet.

Eine schwächere Abhängigkeit kommt von der Lage des Überschneidungswinkelbereichs. Die frühestmögliche Lage ergibt sich, wenn der Verstellwinkel VWE des Einlassventils zum frühestmöglichen Zeitpunkt verschoben ist, während die spätestmögliche Lage erreicht wird, wenn der Verstellwinkel VWA zum spätestmöglichen Zeitpunkt erstellt ist. Für die frühestmögliche Lage, d.h. die früheste Überschneidung wird ein erstes Kennfeld FÜ und für die spätestmögliche Lage, d.h. die späteste Überschneidung ein zweites Kennfeld SÜ vorgehalten, in denen abhängig von Motordrehzahl nmot und Gesamtverstellwinkel GVW bzw. Gesamtverstellhub am Prüfstand ermittelte Restgaswerte abgelegt werden, wie in Fig. 2 dargestellt.

Wenn sich die Gesamtverstellung nicht in den beiden genannten Lagen befindet, dann wird zwischen den beiden Kennfeldern FÜ, SÜ mit einem Schwerpunktfaktor FVW des Nockenwellenverstellwinkelschwerpunkts interpoliert. Dabei wird der Schwerpunktfaktor FVW so gebildet, dass er von Null bei frühestmöglicher Lage bis auf 1 bei spätestmöglicher Lage steigt. Die Restgaswerte RG ergeben sich entsprechend Fig. 2 aus der entsprechenden Gewichtung der in den beiden Kennfeldern FÜ, SÜ niedergelegten Restgaswerte. Beträgt der Schwerpunktfaktor FVW z.B. 0,4, so werden die Restgaswerte des ersten Kennfeldes FÜ mit 0,6 und die Restgaswerte des zweiten Kennfeldes SÜ mit 0,4 gewichtet und die gewichteten Restgaswerte zu den aktuellen Restgaswerten RG zusammengeführt.

Der Schwerpunktfaktor FVW wird aus der Beziehung

$$FVW = (S_{aktuell} - S_{früh}) / (S_{spät} - S_{früh})$$

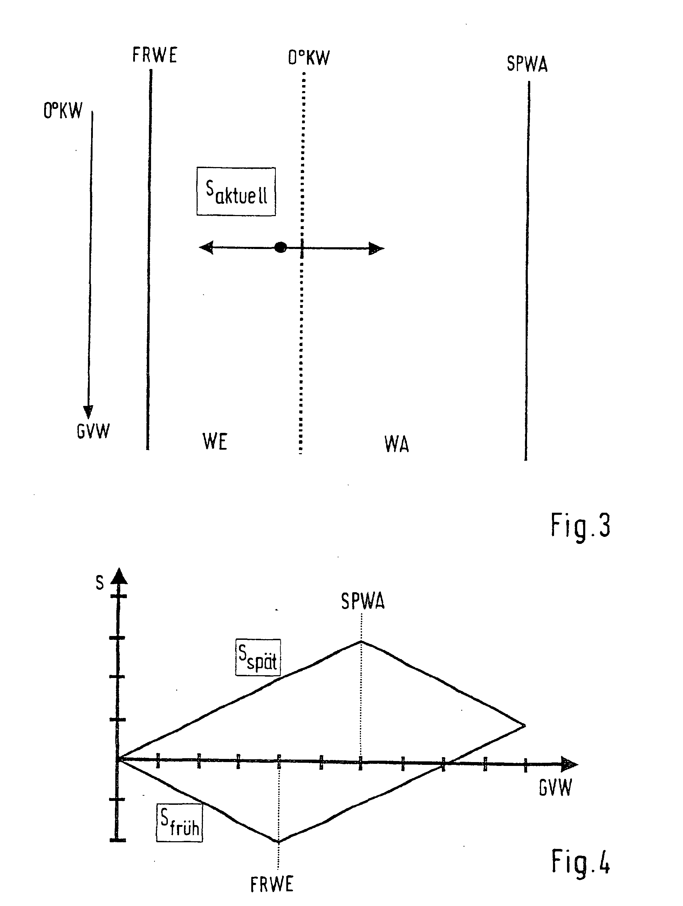

bestimmt. Wie Fig. 3 zeigt, verschiebt sich der aktuelle Schwerpunkt $S_{aktuell}$ in Abhängigkeit von dem Winkel WE, bei dem das Einlassventil öffnet und dem Winkel WA, bei dem das Auslassventil schließt, und zwar in dem Bereich zwischen dem frühesten Einlass-Verstellwinkel FRWE, bei dem das Einlassventil öffnet, und dem spätesten Auslass-Verstellwinkel SPWA, bei dem das Auslassventil schließt.

Fig. 4 zeigt ein Diagramm zur Abhängigkeit des frühesten Schwerpunktes $S_{früh}$, der bei frühestem Einlass-Verstellwinkel FRWE vorliegt, und des spätesten Schwerpunkts $S_{spät}$, der bei spätestem Auslass-Verstellwinkel SPWA vorliegt, in Abhängigkeit von dem Gesamtverstellwinkel GVW. Der früheste Schwerpunkt $S_{früh}$ wird aus der Beziehung

$$S_{früh} = -\tfrac{1}{2} (GVW - 2_* MAX (0; GVW - FRWE))$$

bestimmt, während der späteste Schwerpunkt $S_{spät}$ aus der Beziehung

$$S_{spät} = + \tfrac{1}{2} (GVW - 2_* MAX (0; GVW - SPWA))$$

bestimmt wird. Dabei bedeutet MAX (a; b) eine Funktion, die aus den Werten a und b den größeren auswählt. Der aktuelle Schwerpunkt $S_{aktuell}$ wird aus der Beziehung

$$S_{aktuell} = \tfrac{1}{2} (VWA - VWE)$$

bestimmt.

**Patentansprüche**

1. Verfahren zum Bestimmen des Restgaspartialdruckes in einem Brennraum einer Brennkraftmaschine bei unterschiedlichem Verstellwinkel von Einlassventil (VWE) und/oder Auslassventil (VWA),
   **dadurch gekennzeichnet,**
   **dass** den Restgaspartialdruck bezeichnende, in einem Prüffeld ermittelte Restgaswerte für einen frühestmöglichen Einlass-Verstellwinkel (FRWE) in einem ersten Kennfeld (FÜ) für eine frühestmögliche Lage eines Überschneidungswinkelbereichs,
   und für einen spätmöglichsten Auslass-Verstellwinkel (SPWA) in einem zweiten Kennfeld (SÜ) für eine spätmöglichste Lage eines Überschneidungswinkelbereichs vorgehalten wird,
   **dass** aus dem Einlass-Verstellwinkel (VWE) und dem Auslass-Verstellwinkel (VWA) zu einem Überschneidungswinkel, in dem sowohl Einlassventil als auch Auslassventil geöffnet sind ein Schwerpunktfaktor (FVW) berechnet wird, der einen Verstellwinkelschwerpunkt bezeichnet,
und **dass** zum Bestimmen der Restgaswerte für einen Verstellwinkelbereich zwischen dem frühestmöglichen Einlass-Verstellwinkel (FRWE) und dem spätmöglichsten Auslass-Verstellwinkel (SPWA) zwischen den Restgaswerten der beiden Kennfelder (FÜ, SÜ) mit dem Schwerpunktfaktor (FVW) interpoliert wird.

2. Verfahren nach Anspruch 1,
   **dadurch gekennzeichnet,**
   **dass** der Schwerpunktfaktor (FVW) so gebildet wird, dass er von Null bei frühem Einlass-Verstellwinkel (FRWE) auf Eins bei spätem Auslass-Verstellwinkel (SPWA) steigt.

3. Verfahren nach Anspruch 1 oder 2,
   **dadurch gekennzeichnet,**
   **dass** der Schwerpunktfaktor (FVW) aus dem Zusammenhang

$$FVW = (S_{aktuell} - S_{früh}) / (S_{spät} - S_{früh})$$

bestimmt wird, wobei $S_{aktuell}$ den aktuellen Schwerpunkt, $S_{früh}$ den frühen Schwerpunkt bei frühem Einlass-Verstellwinkel (FRWE) und $S_{spät}$ den späten Schwerpunkt bei spätem Auslass-Verstellwinkel (SPWA) bezeichnen.

4. Verfahren nach Anspruch 3,
   **dadurch gekennzeichnet,**
   **dass** der frühe Schwerpunkt ($S_{früh}$) aus der Beziehung

$$S_{früh} = -\tfrac{1}{2}(GVW - 2_* MAX (0; GVW - FRWE))$$

der späteste Schwerpunkt ($S_{spät}$) aus der Beziehung

$$S_{spät} = +\tfrac{1}{2}(GVW - 2_* MAX (0; GVW - SPWA))$$

und der aktuelle Schwerpunkt ($S_{aktuell}$) aus der Beziehung

$$S_{aktuell} = \tfrac{1}{2}(VWA - VWE)$$

bestimmt werden, wobei GVW den Gesamtverstellwinkel FRWE den frühen Einlass-Verstellwinkel, SPWA den späten Auslass-Verstellwinkel, VWA den aktuellen Auslass-Verstellwinkel, VWE den aktuellen Einlass-Verstellwinkel und MAX (a; b) eine Funktion bezeichnen, die den größeren Wert aus a und b auswählt.

5. Anwendung des Verfahrens nach einem der vorhergehenden Ansprüche in Verbindung mit einem Luftmassenmesser in einem Ansaugrohr zum Modellieren eines Saugrohrdruckes oder in Verbindung mit einem Saugrohrdrucksensor zum Modellieren der Luftfüllung im Brennraum bei an sich bekannter Beziehung zwischen Luftmasse und Saugrohrdruck oder bei Vorhandensein sowohl eines Luftmassenmessers als auch eines Saugrohrdrucksensors zur Fortsetzung des Betriebes bei Ausfall eines der beiden Sensoren.

## Claims

1. Method for determining the residual gas partial pressure in a combustion chamber of an internal combustion engine at varying displacement angles of intake valve (VWE) and/or exhaust valve (VWA),
   **characterized**

**in that** residual gas values, which indicate the residual gas partial pressure and are determined in a test facility, for an earliest possible intake displacement angle (FRWE) are made available in a first map (FÜ) for an earliest possible position of an intersection angle range,
and those for a latest possible exhaust displacement angle (SPWA) are made available in a second map (SÜ) for a latest possible position of an intersection angle range,
**in that** a balance point factor (FVW), which indicates a displacement angle balance point, is calculated from the intake displacement angle (VWE) and from the exhaust displacement angle (VWA) at an intersection angle at which both intake valve and exhaust valve are open,
and **in that**, in order to determine the residual gas values for a displacement angle range between the earliest possible intake displacement angle (FRWE) and the latest possible exhaust displacement angle (SPWA), interpolation is carried out between the residual gas values of the two maps (FÜ, SÜ) using the balance point factor (FVW).

2. Method according to Claim 1,
   **characterized**
   **in that** the balance point factor (FVW) is formed in such a way that it rises from zero at an early intake displacement angle (FRWE) to one at a late exhaust displacement angle (SPWA).

3. Method according to Claim 1 or 2,
   **characterized**
   **in that** the balance point factor (FVW) is determined from the relationship

$$\text{FVW} = (\text{S}_{\text{current}} - \text{S}_{\text{early}}) \; / \; (\text{S}_{\text{late}} - \text{S}_{\text{early}})$$

   where $\text{S}_{\text{current}}$ indicates the current balance point, $\text{S}_{\text{early}}$ indicates the early balance point at an early intake displacement angle (FRWE) and $\text{S}_{\text{late}}$ indicates the late balance point at a late exhaust displacement angle (SPWA).

4. Method according to Claim 3,
   **characterized**
   **in that** the early balance point ($\text{S}_{\text{early}}$) is determined from the relationship

$$\text{S}_{\text{early}} = -\tfrac{1}{2} \, (\text{GVW} - 2* \, \text{MAX} \, (0; \, \text{GVW} - \text{FRWE}))$$

   the latest balance point ($\text{S}_{\text{late}}$) is determined from the relationship

$$\text{S}_{\text{late}} = +\tfrac{1}{2} \, (\text{GVW} - 2* \, \text{MAX} \, (0; \, \text{GVW} - \text{SPWA}))$$

   and the current balance point ($\text{S}_{\text{current}}$) is determined from the relationship

$$\text{S}_{\text{current}} = \tfrac{1}{2} \, (\text{VWA} - \text{VWE})$$

   where GVW indicates the overall displacement angle, FRWE indicates the early intake displacement angle, SPWA indicates the late exhaust displacement angle, VWA indicates the current exhaust displacement angle, VWE indicates the current intake displacement angle and MAX (a; b) indicates a function which selects the larger value from a and b.

5. Application of the method according to one of the preceding claims in connection with an air mass measuring device in an induction pipe for modelling an induction pipe pressure, or in connection with an induction pipe pressure sensor for modelling the air charge in the combustion chamber, with a relationship between air mass and induction pipe pressure known per se or in the presence both of an air mass measuring device and an induction pipe pressure sensor for continued operation in the event of failure of one of the two sensors.

**Revendications**

1. Procédé de détermination de la pression partielle de gaz résiduel dans une chambre de combustion d'un moteur à combustion interne en présence d'un angle de réglage différent de la soupape d'admission (VWE) et/ou de la soupape d'échappement (VWA),
   **caractérisé en ce que**
   les valeurs de gaz résiduel désignant la pression partielle de gaz résiduel, déterminées sur un banc d'essai, sont conservées, pour un angle de réglage d'admission le plus précoce possible (FRWE), dans une première caractéristique (FÜ) pour une position la plus précoce possible d'une zone angulaire de chevauchement,
   et pour un angle de réglage d'échappement le plus tardif possible (SPWA), sont conservées dans une deuxième caractéristique (SÜ) pour une position la plus tardive possible d'une zone angulaire de chevauchement,
   à partir de l'angle de réglage d'admission (VWE) et de l'angle de réglage d'échappement (VWA), sur un angle de chevauchement dans lequel la soupape d'admission et la soupape d'échappement sont toutes deux ouvertes, on calcule un coefficient de centre de gravité (FVW) désignant un centre de gravité d'angle de réglage, et
   pour déterminer les valeurs de gaz résiduel pour une zone angulaire de réglage entre l'angle de réglage d'admission le plus précoce possible (FRWE) et l'angle de réglage d'échappement le plus tardif possible (SPWA), on réalise une interpolation entre les valeurs de gaz résiduel des deux caractéristiques (FÜ, SÜ) avec le coefficient de centre de gravité (FVW).

2. Procédé selon la revendication 1,
   **caractérisé en ce que**
   le coefficient de centre de gravité (FVW) est formé de telle sorte qu'il part de l'état Zéro au niveau de l'angle de réglage d'admission le plus précoce possible (FRWE) pour atteindre l'état Un au niveau de l'angle de réglage d'échappement le plus tardif possible (SPWA).

3. Procédé selon la revendication 1 ou 2,
   **caractérisé en ce que**
   le coefficient de centre de gravité (FVW) est déterminé à partir de la relation

$$FVW = (S_{actuel} - S_{précoce}) / (S_{tardif} - S_{précoce}),$$

   où $S_{actuel}$ désigne le centre de gravité actuel, $S_{précoce}$ désigne le centre de gravité précoce au niveau de l'angle de réglage d'admission précoce (FRWE) et $S_{tardif}$ désigne le centre de gravité tardif au niveau de l'angle de réglage d'échappement tardif (SPWA).

4. Procédé selon la revendication 3,
   **caractérisé en ce que**
   le centre de gravité précoce ($S_{précoce}$) est déterminé à partir de la relation

$$S_{précoce} = -\tfrac{1}{2} (GVW - 2 \cdot MAX (0; GVW - FRWE))$$

   le centre de gravité le plus tardif ($S_{tardif}$) est déterminé à partir de la relation

$$S_{tardif} = +1/2 (GVW - 2 \cdot MAX (0; GVW - SPWA))$$

   et le centre de gravité actuel ($S_{actuel}$) est déterminé à partir de la relation

$$S_{actuel} = 1/2 (VWA - VWE),$$

   où GVW désigne l'angle de réglage total, FRWE désigne l'angle de réglage d'admission précoce, SPWA désigne l'angle de réglage d'échappement tardif, VWA désigne l'angle de réglage d'échappement actuel, VWE désigne l'angle de réglage d'admission actuel et MAX (a; b) désigne une fonction qui sélectionne la valeur la plus élevée entre a et b.

5. Utilisation du procédé selon l'une des revendications précédentes en liaison avec un débitmètre d'air massique dans une tubulure d'admission pour la modélisation d'une pression régnant dans la tubulure d'admission, ou en liaison avec un capteur de pression de tubulure d'admission pour la modélisation du remplissage d'air dans la chambre de combustion en utilisant une relation connue en soi entre la masse d'air et la pression régnant dans la tubulure d'admission, ou en présence à la fois d'un débitmètre d'air massique et d'un capteur de pression de tubulure d'admission, afin de pouvoir assurer le fonctionnement en cas de panne de l'un des deux capteurs.

Fig.1

Fig.2

Fig.3

Fig.4